# EUROPÄISCHE PATENTANMELDUNG

(11) **EP 4 848 578 A1**
(43) Veröffentlichungstag der Anmeldung: **02.12.2026**
(21) Anmeldenummer: 25179394.9
(22) Anmeldetag: 28.05.2025
(51) Int. Cl.: H02S 20/23, F24S 25/11, F24S 25/60, F24S 25/61, F24S 25/63

(54) **ADAPTERELEMENT**

(71) Anmelder: Büsscher & Hoffmann GmbH, 4470 Enns (AT)
(72) Erfinder: LANDL, Karl, 4470 Enns (AT)
(74) Vertreter: SONN Patentanwälte GmbH & Co KG

(57) **Zusammenfassung**

Adapterelement (1) zur Montage eines Solarelements (2) an einer Aufstellfläche (3), insbesondere an einer Dachfläche (3a), aufweisend:
eine Unterseite (4) zur Verbindung mit der Aufstellfläche (3), welche eine Verbindungsschicht (5) zur stoffschlüssigen Verbindung mit der Aufstellfläche (3) aufweist; und
eine Oberseite (6) zur Verbindung mit dem Solarelement (2) oder einer Halterung (10) für das Solarelement (2), welche ein Rückhalteelement (7) mit einer Aufnahmeöffnung (8) aufweist, in die ein Verbindungselement (9) des Solarelements (2) oder der Halterung (10) für das Solarelement (2) aufnehmbar ist,
wobei die Aufnahmeöffnung (8) durch zumindest ein Rückhalteteil (12) des Rückhalteelements (7) begrenzt ist und das Rückhalteelement (7) dazu eingerichtet ist, in einem verbundenen Zustand mit dem Verbindungselement (9) ein Lösen des Verbindungselements (9) aus der Aufnahmeöffnung (8) in zumindest eine vertikale Richtung (V) zu blockieren und eine Bewegung des Verbindungselements (9) in zumindest eine horizontale Richtung (H1, H2) innerhalb des Rückhalteelements (7) zu ermöglichen.

## Beschreibung

Die Erfindung betrifft ein Adapterelement zur Montage eines Solarelements an einer Aufstellfläche, insbesondere an einer Dachfläche, aufweisend:
eine Unterseite zur Verbindung mit der Aufstellfläche, welche eine Verbindungsschicht zur stoffschlüssigen Verbindung mit der Aufstellfläche aufweist; und
eine Oberseite zur Verbindung mit dem Solarelement oder einer Halterung für das Solarelement, welche ein Rückhalteelement mit einer Aufnahmeöffnung aufweist, durch welche ein Verbindungselement des Solarelements oder der Halterung für das Solarelement in das Rückhalteelement aufnehmbar ist.

Des Weiteren betrifft die Erfindung eine Kombination aus einem Adapterelement und einem Solarelement sowie ein Verfahren zur Montage eines Solarelements oder einer Halterung für ein Solarelement an einer Aufstellfläche.

Die Montage von Solarelementen, insbesondere von Photovoltaikmodulen, wird vorwiegend an Flächen vorgenommen, an denen eine hohe Sonneneinstrahlung zu erwarten ist. Hierbei kann es sich beispielswiese um Dachflächen, agrarische Felder oder Parkplatzflächen handeln. Durch die hohe Sonneneinstrahlung ist an solchen Flächen mit einem hohen Stromertrag zu rechnen. Einen Nachteil, der mit der hohen Sonneinstrahlung einhergeht, stellt jedoch die damit verbundene Wärmeausdehnung von Solarelementen und deren Halterungen dar. Insbesondere wenn unterschiedliche Materialien eingesetzt werden, ergibt sich das Problem, dass diese aufgrund unterschiedlicher Wärmeausdehnungskoeffizienten verschiedene Längen- bzw. Breitenausdehnungen erfahren. An Verbindungsstellen zwischen unterschiedlichen Materialien, beispielsweise an der Übergangsstelle zwischen einer Halterung für ein Solarelement und der Aufstellfläche, kann es daher zu Beschädigungen und Ablösungen kommen.

Ein weiteres Problem, das bei der Installation von Solarelementen auf Dachflächen auftritt, besteht darin, dass Monteure von Photovoltaikanlagen in der Regel nicht über die erforderlichen Fachkenntnisse hinsichtlich der fachgerechten Ausführung von Dacharbeiten sowie der thermischen Längenänderungen von Bauteilen verfügen. Umgekehrt sind Dachdecker und Spengler mangels einschlägiger elektrotechnischer Ausbildung nicht qualifiziert, die spezifischen Montage- und Installationsarbeiten von Solarelementen durchzuführen. Infolgedessen kann keines dieser Gewerke eine vollständige, normgerechte Installation von Solarelementen unter Berücksichtigung sowohl der elektrotechnischen, als auch der dachdeckerspezifischen Aspekte durchführen. In der Regel übernehmen Monteure von Solarelementen deren vollständige Montage und Installation. Dies führt in der Praxis allerdings häufig dazu, dass bei der Montage von Solarelementen durch nicht entsprechend geschulte Fachkräfte bestehende Dachabdichtungssysteme beschädigt oder nicht fachgerecht durchdrungen bzw. nachbearbeitet werden, was die Gefahr von Undichtigkeiten und Folgeschäden erheblich erhöht.

Haltevorrichtungen für Solarelemente sind beispielsweise aus DE 2011 052 032 U1 bekannt. FR 2 949 145 A1 zeigt eine Vorrichtung, welche an einer Unterseite mithilfe von Bitumenmaterial an einer Aufstellfläche angebracht werden kann.

Im Lichte dieser Ausführungen ist es Aufgabe der vorliegenden Erfindung, die Nachteile des Standes der Technik zu lindern oder gar gänzlich zu beseitigen. Insbesondere ist es Aufgabe der vorliegenden Erfindung, ein Adapterelement der eingangs erwähnten Art zur Verfügung zu stellen, mit dem Solarelemente oder Halterungen für Solarelemente auf einfache Weise mit einer Aufstellfläche verbunden und mit dem Beschädigungen der Aufstellfläche vermieden werden können.

Gelöst wird diese Aufgabe durch ein Adapterelement nach Anspruch 1 und ein Verfahren zur Montage eines Solarelements oder einer Halterung für ein Solarelement an einer Aufstellfläche nach Anspruch 15. In Anspruch 12 ist eine Kombination aus einem Adapterelement und einem Solarelement angegeben.

Erfindungsgemäß ist bei einem Adapterelement der eingangs erwähnten Art vorgesehen, dass die Aufnahmeöffnung durch zumindest ein Rückhalteteil, insbesondere eine Rückhalteklammer, des Rückhalteelements begrenzt ist und das Rückhalteelement dazu eingerichtet ist, in einem verbundenen Zustand mit dem Verbindungselement ein Lösen des Verbindungselements durch die Aufnahmeöffnung in zumindest eine vertikale Richtung zu blockieren und eine Bewegung des Verbindungselements in zumindest eine horizontale Richtung innerhalb des Rückhalteelements zu ermöglichen. Vorteilhafterweise kann das Verbindungselement des Solarelements oder der Halterung aufgrund der Bewegungsmöglichkeit in die zumindest eine horizontale Richtung in dem Adapterelement aufgenommen und insbesondere schwimmend gelagert werden. Durch die schwimmende Lagerung können thermische Längenausdehnungen der Halterung bzw. des Solarelements kompensiert und nicht direkt auf die Aufstellfläche übertragen werden. Ein weiterer Vorteil, der sich ergibt, ist, dass das Adaptermodul auch von Dachdeckern, die einschlägige Kenntnisse über Dachabdichtungen, nicht aber über Solarelemente verfügen, an Dachflächen vormontiert werden kann. Ein Monteur für die Solarmodule muss dann lediglich zu einem späteren Zeitpunkt die Solarmodule oder deren Halterung mit dem Adapterelement verbinden und braucht keine Arbeiten an der Dachabdichtung vornehmen. Somit wird vermieden, dass Handwerker Arbeiten verrichten müssen, für die sie nicht ausgebildet wurden, wodurch potentielle Schäden einerseits an Dachabdichtungen und andererseits an Solarelementen vermieden werden. Bei dem Solarelement kann es sich um ein Photovoltaikmodul oder ein Solarelement für Warmwassererzeugung handeln. Die Dachfläche kann einen Teil eines Schräg- oder Flachdachs bilden. Das Solarelement kann bei einer Ausführungsform der Erfindung das Verbindungselement zur Verbindung mit dem Adaptermodul ausbilden und direkt mit dem Adapterelement verbunden werden. Typischerweise werden Solarelemente aber mit Hilfe von Halterungen an Aufstellflächen montiert. Bei einer Ausführungsform können die Halterungen ein oder mehrere Verbindungselemente aufweisen, die mit dem Adapterelement verbunden werden können. Die Halterung kann wiederum mit dem Solarelement verbunden werden. Die Halterungen können beispielsweise Schienen, Stangen und/oder Rahmen aufweisen. Mithilfe der Halterung kann ein Solarelement gegenüber der Aufstellfläche geneigt werden. An der Unterseite des Adapterelements ist eine Verbindungsschicht zur stoffschlüssigen Verbindung mit der Aufstellfläche vorgesehen. Die Verbindungsschicht kann vorzugsweise zumindest die gesamte Unterseite des Rückhalteelements bedecken. Bei einer Variante der Erfindung kann die Verbindungsschicht von der Unterseite des Rückhalteelements seitlich hervorstehen bzw. abstehen und einen Verbindungsschicht-Überstand ausbilden, der beispielsweise zumindest 30 mm betragen kann. Der Verbindungsschicht-Überstand kann an gegenüberliegenden Seiten des Rückhalteelements abstehen. Es kann auch vorgesehen sein, dass der Verbindungsschicht-Überstand einen umlaufenden Überstand um die das Rückhalteelement bildet. Der Verbindungsschicht-Überstand kann in diesem Fall auch als umlaufender Randabschnitt gesehen werden. Die Verbindungsschicht kann ein Dachabdichtungsmaterial aufweisen. Bevorzugt ist das Material der Verbindungsschicht dasselbe wie an der Aufstellfläche. Dadurch ergibt sich eine hohe Kompatibilität zwischen Aufstellfläche und Adapterelement. Die Verbindungsschicht kann eine Dicke zwischen 1,5 mm und 7 mm, insbesondere zwischen 2 mm und 7 mm oder zwischen 2,5 mm und 5 mm, aufweisen. Die Verbindungsschicht kann eine Klebeschicht sein. Die Verbindungsschicht weist ein Verbindungsmaterial zur stoffschlüssigen Verbindung mit der Aufstellfläche auf. Das Verbindungsmaterial ist beispielswiese ein Bitumenmaterial. Das Rückhalteelement bildet eine Aufnahmeöffnung, welche von dem Verbindungselement durchdrungen werden kann. Wenn das Verbindungselement in das Rückhalteelement aufgenommen ist, kann ein Teil des Verbindungselements durch die Aufnahmeöffnung ragen. Das Rückhalteelement kann einen Aufnahmeraum für das Verbindungselement ausbilden, der von dem zumindest einen Rückhalteteil zumindest teilweise begrenzt wird. Um zu vermeiden, dass das Verbindungselement durch die Aufnahmeöffnung aus dem Rückhalteelement gezogen wird, ist das zumindest eine Rückhalteteil vorgesehen. Das zumindest eine Rückhalteteil verhindert, dass das Verbindungselement in vertikale Richtung nach oben aus der Aufnahmeöffnung gezogen wird. Gleichzeitig ermöglicht das zumindest eine Rückhalteteil aber eine Beweglichkeit in zumindest eine horizontale Richtung, was in Bezug auf allfällige Wärmeausdehnungen des Solarmoduls vorteilhaft ist, da diese durch die von dem zumindest einen Rückhalteelement ermöglichte Beweglichkeit kompensiert werden kann. Durch die Beweglichkeit in zumindest eine horizontale Richtung ist eine schwimmende Lagerung des Verbindungselements in dem Rückhalteelement möglich, wenn das Verbindungselement entsprechend dimensioniert ist. Bei einer Ausführungsform kann vorgesehen sein, dass das Verbindungselement in zumindest zwei horizontale, vorzugsweise rechtwinkelig zueinanderstehende Richtungen beweglich innerhalb des Rückhalteelements aufgenommen ist. Beispielswiese kann das Verbindungselement längs und quer zu dem Rückhalteelement beweglich aufgenommen sein. Es kann auch vorgesehen sein, dass das zumindest eine Rückhalteteil eine vertikale Beweglichkeit des Verbindungselements ermöglicht. Erfindungsgemäß ist zwar vorgesehen, dass ein Lösen des Verbindungselements aus der Aufnahmeöffnung in zumindest eine vertikale Richtung blockiert wird, vorzugsweise durch Formschluss, was allerdings keine vertikale Beweglichkeit des Verbindungselements innerhalb des Rückhalteelements bzw. innerhalb des Aufnahmeraums in dem verbundenen Zustand ausschließt. Bevorzugt wird aber eine Beweglichkeit des Verbindungselements in vertikale Richtung durch das zumindest eine Rückhalteteil im Wesentlichen verhindert. zu diesem Zweck kann der Aufnahmeraum des Rückhalteelements eine Höhe aufweisen, die im Wesentlichen einer Höhe des Verbindungselements entspricht. Das zumindest eine Rückhalteteil ermöglicht eine Beweglichkeit in zumindest eine horizontale Richtung, blockiert aber ebenfalls ein Lösen des Verbindungselements in zumindest eine horizontale Richtung, vorzugsweise durch Formschluss. Wenn das Verbindungselement in zwei rechtwinkelig zueinander stehende horizontale Richtungen beweglich gelagert ist, kann vorgesehen sein, dass das zumindest eine Rückhalteteil ein Lösen des Verbindungselements durch Formschluss in die erste horizontale Richtung verhindert, in die zweite horizontale Richtung aber erlaubt. Zusammenfassend liegt jedenfalls ein horizontales Spiel in eine oder mehrere vorzugsweise rechtwinkelig zueinander stehende horizontale Richtungen für das Verbindungselement vor, es kann aber auch ein vertikales Spiel für das Verbindungselement vorgesehen sein. Das Rückhalteelement kann aus Kunststoff oder Metall, insbesondere Aluminium oder Edelstahl, bestehen.

Richtungsangaben in dieser Offenbarung beziehen sich auf den bestimmungsgemäßen Gebrauchszustand des Adapterelements, wenn dieses auf einer horizontalen Aufstellfläche montiert ist. Vertikal bedeutet somit parallel zur Erdbeschleunigung.

Um das Verbindungselement sicher in dem Rückhalteelement zu halten, ist es vorteilhaft, wenn das Rückhalteelement zumindest zwei vorzugsweise gleichartige Rückhalteteile, insbesondere zumindest zwei vorzugsweise gleichartige Rückhalteklammern, an gegenüberliegenden Seiten der Aufnahmeöffnung aufweist. Die Rückhalteteile können zueinander gespiegelt angeordnet sein. Die Rückhalteteile können die Aufnahmeöffnung zumindest teilweise begrenzen. Die Rückhalteteile können entlang von Längsseiten des Rückhalteelements verlaufen. An den Längsseiten können auch mehrere Rückhalteteile vorgesehen sein.

Bei einer Ausführungsform der Erfindung ist vorgesehen, dass das Rückhaltelement eine Bodenfläche aufweist, von der die zumindest zwei Rückhalteteile abstehen, und die zumindest zwei Rückhalteteile vorzugsweise einstückig mit der Bodenfläche ausgebildet sind. Die Bodenfläche ist vorzugsweise eben, also ungewölbt und plan. Die zumindest zwei Rückhalteteile und die Bodenfläche können aus einem Werkstück hergestellt sein. Möglich ist aber auch, dass die Rückhalteteile getrennte Bauteile darstellen, die mit der Bodenfläche mechanisch, zum Beispiel durch Schrauben oder Nieten, verbunden werden.

Damit das Verbindungselement gegen ein Herausziehen aus dem Rückhalteelement gesichert werden kann, ist es günstig, wenn das zumindest eine Rückhalteteil, insbesondere die zumindest eine Rückhalteklammer, eine Hinterschneidung ausbildet. Die Hinterschneidung ist vorzugsweise zwischen der Halteklammer und der Bodenfläche angeordnet. Das Verbindungselement kann in die Hinterschneidung eingreifen.

Günstig ist, wenn das zumindest eine Rückhalteteil dazu ausgebildet ist, in dem verbundenen Zustand des Rückhalteelements mit dem Verbindungselement ein Gegenelement des Verbindungselements zumindest teilweise zu umgreifen. Das Gegenelement kann bei einer Ausführungsform ein Zapfen oder eine Schiene sein. Möglich ist aber auch, dass das Gegenelement durch eine Kante des Verbindungselements gebildet ist.

Das Rückhalteelement kann länglich ausgebildet sein. Folglich kann auch das zumindest eine Rückhalteteil länglich ausgebildet sein. Selbstverständlich kann das Rückhalteelement aber auch andere Formen aufweisen, beispielsweise quadratisch sein.

Eine besonders gut zu montierende Ausgestaltung der Erfindung ergibt sich, wenn die Unterseite des Adapterelements eine Montagefläche, insbesondere eine Montageplatte, aufweist, an welcher die Verbindungsschicht angebracht ist, wobei die Montagefläche mit dem Rückhalteelement verbunden ist. Die Montageplatte kann länglich ausgebildet sein. Selbstverständlich kann die Montageplatte aber auch andere Formen aufweisen, beispielsweise quadratisch sein. Die Montagefläche erhöht die nutzbare Verbindungsfläche und sorgt für eine bessere Lastverteilung. Die Verbindungsschicht ist an einer Unterseite der Montagefläche angeordnet. Dadurch wird das Risiko, unter dem Adapterelement befindliche Abdichtungen zu beschädigen, minimiert. Bevorzugt besteht die Montagefläche aus Metall oder Kunststoff. Bei einer Variante der Erfindung kann die Verbindungsschicht einen Verbindungsschicht-Überstand ausbilden, mit dem die Verbindungsschicht seitlich von der Montagefläche absteht. Der Verbindungsschicht-Überstand kann beispielsweise zumindest 30 mm betragen und an gegenüberliegenden Seiten der Montagefläche abstehen. Bevorzugt bildet der Verbindungsschicht-Überstand einen umlaufenden Überstand um die Montagefläche.

Eine weiter verbesserte Lastverteilung ergibt sich, wenn die Montagefläche einen Überstand aufweist, mit dem die Montagefläche in einem Querschnitt des Adapterelements betrachtet über das Rückhalteelement hinausragt. Der Überstand, mit dem die Montagefläche von dem Rückhalteelement absteht, beträgt vorzugsweise zumindest 30 mm, vorzugsweise zwischen 30 mm und 100 mm. Bevorzugt ist der Überstand an gegenüberliegenden Seiten des Rückhalteelements vorgesehen. Besonders bevorzugt ist der Überstand entlang des ganzen Umfangs des Rückhalteelements vorgesehen. Mit anderen Worten bildet die Montagefläche einen vollständig umlaufenden Überstand um das Rückhalteelement aus. Der Überstand der Montagefläche kann auch mit einer Beschwerung versehen sein, um im Falle des Ablösens der Verbindungsschicht von der Aufstellfläche ein Verrutschen des Adapterelements weiterhin zu verhindern. Die Beschwerung kann mit Gewichten erfolgen. Gleiches gilt für den Verbindungsschicht-Überstand, wenn ein solcher vorgesehen ist.

Günstig ist, wenn im Wesentlichen eine gesamte Unterseite der Montagefläche mit der Verbindungsschicht versehen ist. Dadurch erhöht sich die Verbindungskraft zwischen dem Adapterelement und der Aufstellfläche.

Bei einer Ausführungsform der Erfindung kann vorgesehen sein, dass die Montagefläche eine Länge von zumindest 10 cm, vorzugsweise von zumindest 20 cm oder zumindest 30 cm, und/oder eine Breite von zumindest 10 cm, vorzugsweise von zumindest 20 cm oder zumindest 30 cm, besitzt.

Ein einfach herzustellendes Adapterelement ergibt sich, wenn die Montagefläche mit dem Rückhalteelement einstückig ausgebildet oder stoffschlüssig verbunden ist. Eine stoffschlüssige Verbindung kann beispielsweise durch Verkleben oder Verschweißen erreicht werden.

Vorteilhaft ist, wenn die Verbindungsschicht an der Unterseite des Adapterelements bereits ab Werk angebracht ist. Um ungewollte Verklebungen des Adapterelements während des Transports zu vermeiden, ist es günstig, wenn die Verbindungsschicht mit einem abnehmbaren Abdeckelement, insbesondere einer Abziehfolie, bedeckt ist. Vor Ort kann bei der Montage das Abdeckelement entfernt werden und anschließend die Verbindungsschicht mit der Aufstellfläche verbunden werden. Durch Entfernen des Abdeckelements kann dieses von einer Transportstellung in eine Verbindungsstellung gebracht werden.

Die Verbindungsschicht kann ein Bitumenmaterial und/oder ein synthetisches Verbindungsmaterial, vorzugsweise ein TPE-Material (TPE: Thermoplastisches Elastomer), insbesondere ein TPO-Material (TPO: Thermoplastische Elastomere auf Olefinbasis), aufweisen. TPO kann auch als FPO (FPO: Flexible Polyolefine) bezeichnet werden. Vor und/oder bei der Anbringung des Adapterelements kann bei einer Ausführungsform der Erfindung die Verbindungsschicht erwärmt werden, um die Verbindung der Verbindungsschicht mit der Aufstellfläche, welche typischerweise ebenfalls Bitumenmaterial oder TPE aufweist, zu begünstigen.

Eine Weiterbildung der Erfindung betrifft eine Kombination aus einem Adapterelement und einem Solarelement, wobei ein Verbindungselement des Solarelements oder einer Halterung für das Solarelement mit dem Adapterelement verbunden ist. Das Adapterelement ist wie oben beschrieben ausgebildet. Das Rückhalteelement blockiert ein Lösen des Verbindungselements aus der Aufnahmeöffnung in zumindest eine vertikale Richtung, ermöglicht aber eine Bewegung des Verbindungselements in zumindest eine horizontale Richtung innerhalb des Rückhalteelements. Die oben bereits in Zusammenhang mit dem Adapterelement beschriebenen Vorteile, Effekte und Merkmale gelten auch für die Kombination aus einem Adapterelement und einem Solarelement. Vorteilhaft ist jedenfalls, dass das Verbindungselement schwimmend in dem Rückhalteelement, insbesondere einem Aufnahmeraum des Rückhalteelements, gelagert wird. Die schwimmende Lagerung des Verbindungselements bezieht sich zumindest auf eine horizontale Richtung. Wie oben bereits erwähnt, kann aber auch in vertikale Richtung eine schwimmende Lagerung des Verbindungselements vorgesehen sein.

Vorteilhaft ist, wenn das Rückhalteelement einen Aufnahmeraum für das Verbindungselement ausbildet, welcher in einem Querschnitt des Rückhalteelements betrachtet eine größere innere Breite aufweist als die Breite des Verbindungselements, sodass das Verbindungselement in die horizontale Richtung mit einem horizontalen Spiel beweglich innerhalb des Aufnahmeraums angeordnet ist. Die Breite des Aufnahmeraums entspricht der inneren Breite des Rückhalteelements. Das Spiel entspricht der Differenz zwischen der Breite des Aufnahmeraums und der Breite des Verbindungselements. Die Breite des Verbindungselements entspricht vorzugswiese dessen äußerster Breite in jenem Bereich, der zur Aufnahme in das Rückhalteelement vorgesehen ist.

Das horizontale Spiel beträgt bevorzugt zumindest 10 mm. Bevorzugt ist, wenn das horizontale Spiel zwischen 10 mm und 70 mm beträgt.

Die Erfindung betrifft auch ein Verfahren zur Montage eines Solarelements oder einer Halterung für ein Solarelement an einer Aufstellfläche, insbesondere einer Dachfläche, mit den Schritten:
Anbringen eines Adapterelements wie oben beschrieben an der Aufstellfläche durch Verbinden der Verbindungsschicht mit der Aufstellfläche, vorzugsweise wobei ein Abdeckelement von der Verbindungsschicht abgezogen wird;
Verbinden eines Verbindungselements des Solarelements oder der Halterung des Solarelements mit dem Adapterelement, indem das Verbindungselement in die Aufnahmeöffnung eingeführt wird, wobei das Rückhalteelement ein Lösen des Verbindungselements aus der Aufnahmeöffnung in zumindest eine vertikale Richtung blockiert und eine Bewegung des Verbindungselements in zumindest eine horizontale Richtung innerhalb des Rückhalteelements ermöglicht.

Die oben in Zusammenhang mit dem Adapterelement und der Kombination aus einem Adapterelement und einem Solarelement beschriebenen Vorteile, Merkmale und Effekte sind auch auf das Verfahren übertragbar. Beim Anbringen des Adapterelements auf die Aufstellfläche kann die Aufstellfläche und/oder die Verbindungsschicht erwärmt werden, beispielsweise mithilfe eines Föhns oder eines Abflammgeräts. Die Aufstellfläche, an der das Adapterelement angebracht wird, weist bevorzugt ein Bitumenmaterial oder TPE-Material, insbesondere ein TPO-Material, auf. Das Adapterelement kann beispielsweise von einem Dachdecker an der Aufstellfläche montiert werden. Nach dem Anbringen des Adapterelements an der Aufstellfläche kann das Solarelement oder die Halterung hierfür von einem anderen Monteur, beispielsweise einem Elektriker, mit dem Adapterelement verbunden werden.

Nachfolgend wird die Erfindung anhand von Figuren näher beschrieben, auf die sie jedoch nicht beschränkt sein soll. Es zeigen:
Fig. 1 ein Adapterelement in einer perspektivischen Ansicht;
Fig. 2 ein Adapterelement an einer Dachfläche in einem Querschnitt;
Fig. 3 eine Photovoltaikanlage;
Fig. 4 Halterungen für Solarelemente, die mit Adapterelementen an einer Dachfläche angeordnet sind.

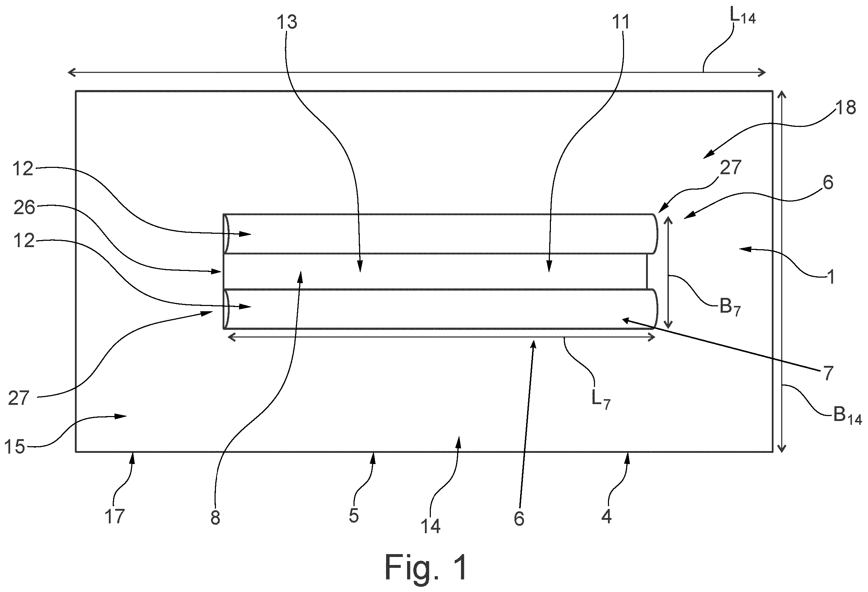

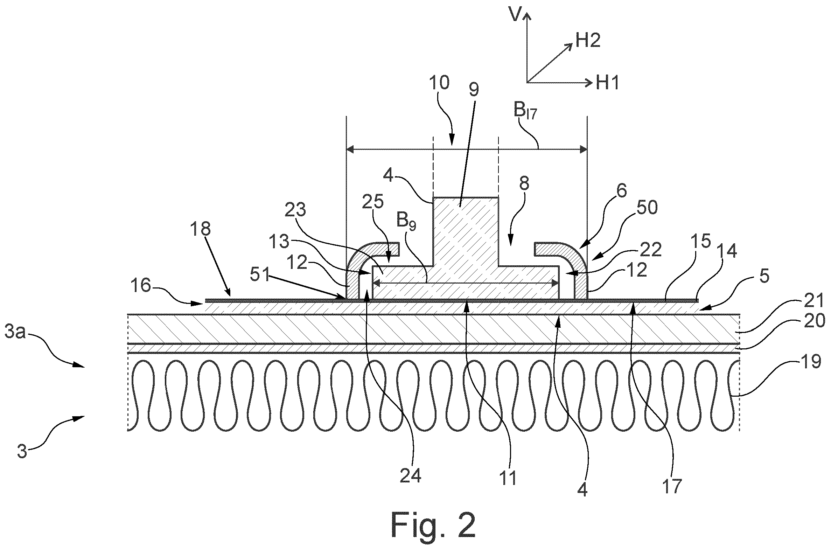

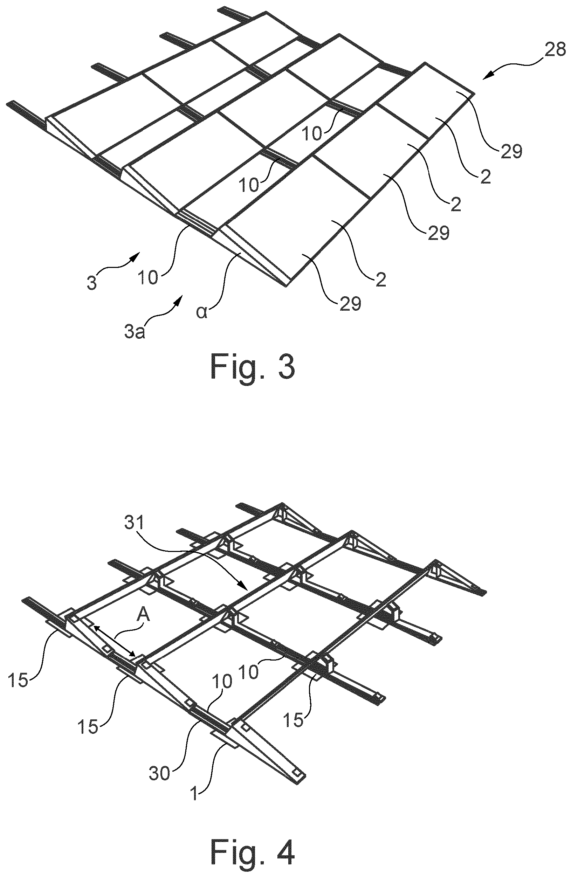

Fig. 1 und Fig. 2 zeigt ein Adapterelement 1 zur Montage eines Solarelements 2 (siehe Fig. 3) an einer Aufstellfläche 3, insbesondere an einer Dachfläche 3a (siehe Fig. 2 oder Fig. 3). Das Adapterelement 1 besitzt eine Unterseite 4, welche eine Verbindungsschicht 5 aufweist, sowie eine Oberseite 6 mit einem beispielsweise länglichen Rückhalteelement 7. Das Rückhalteelement 7 weist seinerseits an einer Oberseite eine Aufnahmeöffnung 8 für ein Verbindungselement 9 (siehe Fig. 2) des Solarelements 2 oder einer Halterung 10 (siehe Fig. 4) für ein Solarelement 2 auf. Das Rückhalteelement 7 weist eine Bodenfläche 11 sowie zwei gegenüberliegende Rückhalteteile in Form von Rückhalteklammern 12 auf. Die Figuren zeigen Rückhalteklammern 12 als spezielle Ausgestaltungen von Rückhalteteilen. Bei der Erfindung können aber auch andere Rückhalteteile als Rückhalteklammern 12 eingesetzt werden. Die Bodenfläche 11 und die Rückhalteklammern 12 begrenzen einen Aufnahmeraum 13 für das Verbindungselement 9. Wie unten näher beschrieben, kann das Verbindungselement 9 in dem Aufnahmeraum 13 mit einem Spiel 24, 25 gelagert sein. Das Rückhalteelement 7 ist vorzugsweise einstückig ausgebildet. Bevorzugt ist, wenn das Rückhalteelement 7 aus Metall, insbesondere Aluminium, besteht.

Wie in Fig. 2 ersichtlich, ist an einer Unterseite 51 des Rückhalteelements 7 eine Montagefläche 14, vorzugsweise eine Montageplatte 15, vorgesehen, an welcher die Verbindungsschicht 5 unterseitig angeordnet ist. Die Verbindungsschicht 5 weist bevorzugt ein Bitumenmaterial 16 oder ein TPE-Material, insbesondere ein TPO-Material, auf und ist an einer Unterseite 17 der Montagefläche 14 angeordnet. Günstig ist, wenn die gesamte Unterseite 17 der Montagefläche 14 mit der Verbindungsschicht 5 bedeckt ist. Um unerwünschte Verbindungen während des Transports zu vermeiden und ein Verschmutzen der Verbindungsschicht 5 zu verhindern, kann diese während des Transports mit einem Abdeckelement (nicht gezeigt), insbesondere einer Abdeckfolie, versehen sein. Durch Abnehmen des Abdeckelements kann das Adapterelement 1 von einer Transportstellung in eine Verbindungsstellung überführt werden.

Das Rückhalteelement 7 kann eine Länge L₇ von beispielsweise 200 mm bis 400 mm, eine Breite B₇ von 200 mm bis 400 mm sowie eine Höhe H₇ von 20 mm bis 100 mm aufweisen. Die Montagefläche 14 kann beispielsweise eine Länge L₁₄ von 200 mm bis 600 mm und eine Breite B₁₄ von 200 mm bis 600 mm aufweisen. Bevorzugt wird somit ein Überstand 18 ausgebildet, mit dem sich die Montagefläche 14 von dem Rückhalteelement 7 wegerstreckt. Bevorzugt ist der Überstand 18 als umlaufender Überstand 18 ausgebildet, der das Rückhalteelement 7 umfangseitig umgibt. Bei einer Variante der Erfindung kann vorgesehen sein, dass der Überstand 18 mit zusätzlichen Gewichten versehen wird, um das Solarelement zusätzlich zu sichern.

Fig. 2 zeigt eine Kombination 50 aus einem Adapterelement 1 und einem Verbindungselement 9. Dargestellt ist ein Querschnitt des Verbindungselements 9 und des Adapterelements 1, das mit der Dachfläche 3a verbunden ist. Das Verbindungselement 9 befindet sich in einem verbundenen Zustand mit dem Adapterelement 1. Die Dachfläche 3a weist zumindest einen Dämmstoff 19, eine Dachhaut 20 und darüber eine Abdichtung 21 auf, welche bevorzugt aus Bitumenmaterial oder einem TPE-Material besteht. Die Verbindungsschicht 5 ist mit der Abdichtung 21 vorzugsweise stoffschlüssig verbunden. Um die stoffschlüssige Verbindung herzustellen, kann vorgesehen sein, dass die Verbindungsschicht 5 und/oder die Abdichtung 21 erwärmt wird, beispielsweise durch Sonneneinstrahlung oder einem Abflammgerät.

In Fig. 2 ist erkennbar, dass die Rückhalteklammern 12 jeweils eine Hinterschneidung 22 ausbilden. Zu diesem Zweck können die Rückhalteklammern 12 gebogen bzw. gewölbt sein. Die Hinterschneidungen 22 sind Teil des Aufnahmeraums 13. Bevorzugt sind die Rückhalteklammern 12 zueinander gespiegelt angeordnet. In das Rückhalteelement 7 ist ein schematisch dargestelltes Verbindungselement 9 eingefügt, welches von den Rückhalteklammern 12 zumindest teilweise umgriffen wird. Zu diesem Zweck kann das Verbindungselement 9 entsprechende Gegenelemente 23, beispielsweise Auskragungen, Kanten oder Schienen, aufweisen. Das Verbindungselement 9 ist zumindest teilweise in den Hinterschneidungen 22 angeordnet. Das Verbindungselement 9 kann an einem Solarelement 2 oder an einer Halterung 10 für ein Solarelement 2 angebracht sein.

Erfindungsgemäß ist vorgesehen, dass ein Lösen des Verbindungselements 9 aus der Aufnahmeöffnung 8 in zumindest eine vertikale Richtung V blockiert wird, aber eine Bewegung des Verbindungselements in zumindest eine horizontale Richtung H1, H2 innerhalb des Rückhalteelements 7 ermöglicht wird. Somit können unterschiedliche Wärmeausdehnungen von Materialien, insbesondere des Metalls der Solarelemente 2 und Halterungen 10 einerseits und der Abdichtung 21, der Dachhaut 20 und des Dämmstoffes 19 andererseits, kompensiert werden. Vorteilhafterweise werden dadurch Beschädigungen der Dachfläche 3a vermieden. Das Verbindungselement 9 ist somit in dem Rückhalteelement 7 zumindest in eine, vorzugsweise zumindest in zwei, rechtwinkelig zueinander orientierte horizontale Richtungen H1, H2 beweglich bzw. schwimmend gelagert. Dabei liegt ein horizontales Spiel 24 zwischen dem im Wesentlichen mittig gelagerten Verbindungselement 9 und den Rückhalteklammern 12 in die erste horizontale Richtung H1 von zumindest 10 mm, vorzugsweise zwischen 10 mm bis 70 mm, vor. Zu diesem Zweck weist das Rückhalteelement 7 eine innere Breite B_{I7} zwischen den Rückhalteklammern 12 auf, die größer ist als die Breite B₉ des Verbindungselements 9. Sobald das Verbindungselement 9 an einer Rückhalteklammer 12 anliegt, wird ein weiteres Bewegen durch Formschluss jedoch verhindert. Das horizontale Spiel 24 bezieht sich auf die Differenz zwischen der Breite B₉ des Verbindungselements 9 und der inneren Breite B_{I7} des Rückhalteelements 7. Das Verbindungselement 9 kann auch in die zweite horizontale Richtung H2, die rechtwinkelig zu der ersten horizontalen Richtung H1 orientiert ist, schwimmend gelagert sein. Auch das Spiel 24 in die zweite horizontale Richtung H2 kann vorzugsweise zumindest 10 mm, vorzugsweise zwischen 10 mm bis 70 mm, betragen. Es kann auch ein vertikales Spiel 25 zwischen dem eingefügten, an der Bodenfläche 11 aufliegenden Verbindungselement 9 und den Rückhalteklammern 12 vorliegen. Bevorzugt wird aber ein vertikales Spiel 25 durch Formschluss weitgehend verhindert. Mit anderen Worten ins das Verbindungselement 9 in vertikale Richtung im Wesentlichen nicht beweglich. Ein Herausziehen des Verbindungselements 9 durch die Aufnahmeöffnung 8 wird mit den Rückhalteklammern 12 aber verhindert. Um das Verbindungselement 9 mit dem Adapterelement 1 zu verbinden, kann dieses in der gezeigten Ausführungsform beispielsweise über Öffnungen 26 an den Stirnseiten 27 (siehe Fig. 1) eingeschoben werden.

Fig. 3 zeigt eine Photovoltaikanlage 28 mit mehreren Solarelementen 2 in Form von Photovoltaikpaneelen 29. Die Photovoltaikpaneele 29 sind mit Halterungen 10 an einer Dachfläche 3a befestigt. Mithilfe der Halterungen 10 können die Photovoltaikpaneele 29 in einem Winkel α gegenüber der Dachfläche 3a ausgerichtet und gleichzeitig an dieser befestigt werden.

Fig. 4 zeigt die Halterungen 10 für die Solarelemente 2. Erkennbar ist, dass die Halterungen 10 Schienenelemente 30 aufweisen, die auch als Verbindungselemente 9 fungieren und mit Adapterelementen 1 verbunden werden können. Die Schienenelemente 30 sind in schematisch eingezeichnete Adapterelemente 1 aufgenommen. Dabei durchdringen die Schienenelemente 30 die Rückhalteelemente 7 der Adapterelemente 1 zwischen den Stirnseiten 27. Die Schienenelemente 30 sind dabei so dimensioniert, dass zumindest ein horizontales Spiel 24 zwischen den Schienenelementen 30 und den Rückhalteklammern 12 gegeben ist, aber ein Lösen durch die Aufnahmeöffnung 8 in vertikale Richtung V vermieden wird. Auf diese Weise sind die Schienenelemente 30 in horizontale Richtung schwimmend mithilfe der Adapterelemente 1 an der Dachfläche 3a gelagert. Der Abstand A zwischen den Adapterelementen 1 entlang eines Schienenelements 30 kann beispielsweise zwischen 70 cm und 200 cm, vorzugsweise zwischen 80 cm und 180 cm, betragen. Bei einer Variante der Erfindung können Enden der Schienenelemente mit Abschluss-Adapterelementen (nicht gezeigt) verbunden sein, die an einer Stirnseite 27 ein Abschlusselement (nicht gezeigt) aufweisen, um ein Herausschieben bzw. Herausziehen der Schienenelemente 30 zu vermeiden.

Günstig ist, wenn ein Ankerpunkt 31 vorgesehen ist, der mit der Aufstellfläche 3 verbunden ist, welcher keine schwimmende Lagerung ermöglicht, sondern fest ist. Der Ankerpunkt 31 ist somit ein fixer Ankerpunkt 31, der die Photovoltaikanlage 28 an einer Stelle fixiert. Bevorzugt ist der Ankerpunkt 31 in einem zentralen Bereich der Photovoltaikanlage angeordnet. Der Ankerpunkt 31 ist mit der Halterung 10 oder dem Solarelement 2 im Unterschied zu den Adapterelementen 1 ohne Spiel verbunden. Die Adapterelemente 1 ermöglichen eine schwimmende Lagerung und dadurch eine Kompensation thermischer Ausdehnungen.

## Patentansprüche

1. Adapterelement (1) zur Montage eines Solarelements (2) an einer Aufstellfläche (3), insbesondere an einer Dachfläche (3a), aufweisend:
eine Unterseite (4) zur Verbindung mit der Aufstellfläche (3), welche eine Verbindungsschicht (5) zur stoffschlüssigen Verbindung mit der Aufstellfläche (3) aufweist; und
eine Oberseite (6) zur Verbindung mit dem Solarelement (2) oder einer Halterung (10) für das Solarelement (2), welche ein Rückhalteelement (7) mit eine Aufnahmeöffnung (8) aufweist, durch welche ein Verbindungselement (9) des Solarelements (2) oder der Halterung (10) für das Solarelement (2) in das Rückhalteelement (7) aufnehmbar ist,
**dadurch gekennzeichnet, dass** die Aufnahmeöffnung (8) durch zumindest ein Rückhalteteil, insbesondere eine Rückhalteklammer (12), des Rückhalteelements (7) begrenzt ist und das Rückhalteelement (7) dazu eingerichtet ist, in einem verbundenen Zustand mit dem Verbindungselement (9) ein Lösen des Verbindungselements (9) durch die Aufnahmeöffnung (8) in zumindest eine vertikale Richtung (V) zu blockieren und eine Bewegung des Verbindungselements (9) in zumindest eine horizontale Richtung (H1, H2) innerhalb des Rückhalteelements (7) zu ermöglichen.

2. Adapterelement (1) nach Anspruch 1, **dadurch gekennzeichnet, dass** das Rückhalteelement (7) zumindest zwei vorzugsweise gleichartige Rückhalteteile, insbesondere zumindest zwei vorzugsweise gleichartige Rückhalteklammern (12), an gegenüberliegenden Seiten der Aufnahmeöffnung (8) aufweist.

3. Adapterelement (1) nach Anspruch 2, **dadurch gekennzeichnet, dass** das Rückhaltelement (7) eine Bodenfläche (11) aufweist, von der die zumindest zwei Rückhalteteile, insbesondere die Rückhalteklammern (12), abstehen, und die zumindest zwei Rückhalteteile vorzugsweise einstückig mit der Bodenfläche (11) ausgebildet sind.

4. Adapterelement (1) nach einem der Ansprüche 1 bis 3, **dadurch gekennzeichnet, dass** das zumindest eine Rückhalteteil eine Hinterschneidung (22) ausbildet.

5. Adapterelement (1) nach einem der Ansprüche 1 bis 4, **dadurch gekennzeichnet, dass** das zumindest eine Rückhalteteil, insbesondere die zumindest eine Rückhalteklammer (12), dazu ausgebildet ist, in dem verbundenen Zustand des Rückhalteelements (7) mit dem Verbindungselement (7) ein Gegenelement (23) des Verbindungselements (9) zumindest teilweise zu umgreifen.

6. Adapterelement (1) nach einem der Ansprüche 1 bis 5, **dadurch gekennzeichnet, dass** die Unterseite (4) des Adapterelements (1) eine Montagefläche (14), insbesondere eine Montageplatte (15), aufweist, an welcher die Verbindungsschicht (5) angebracht ist, wobei die Montagefläche (14) mit dem Rückhalteelement (7) verbunden ist.

7. Adapterelement (1) nach Anspruch 6, **dadurch gekennzeichnet, dass** die Montagefläche (14) einen Überstand (18) aufweist, mit dem die Montagefläche (14) in einem Querschnitt des Adapterelements (1) betrachtet über das Rückhalteelement (7) hinausragt.

8. Adapterelement (1) nach Anspruch 6 oder 7, dass im Wesentlichen eine gesamte Unterseite (17) der Montagefläche (14) mit der Verbindungsschicht (5) versehen ist.

9. Adapterelement (1) nach einem der Ansprüche 6 bis 8, **dadurch gekennzeichnet, dass** die Montagefläche (14) eine Länge (L₁₄) von zumindest 10 cm, vorzugsweise von zumindest 20 cm, und/oder eine Breite (B₁₄) von zumindest 10 cm, vorzugsweise von zumindest 20 cm, besitzt.

10. Adapterelement (1) nach einem der Ansprüche 1 bis 9, **dadurch gekennzeichnet, dass** die Verbindungsschicht (5) mit einem abnehmbaren Abdeckelement, insbesondere einer Abziehfolie, bedeckt ist.

11. Adapterelement (1) nach einem der Ansprüche 1 bis 10, **dadurch gekennzeichnet, dass** die Verbindungsschicht (5) ein Bitumenmaterial und/oder ein synthetisches Verbindungsmaterial, vorzugsweise ein TPE-Material, insbesondere ein TPO-Material, aufweist.

12. Kombination (50) aus einem Adapterelement (1) und einem Solarelement (2), wobei ein Verbindungselement (9) des Solarelements (2) oder einer Halterung (10) für das Solarelement (2) mit dem Adapterelement (1) verbunden ist, **dadurch gekennzeichnet, dass** das Adapterelement (1) nach einem der Ansprüche 1 bis 11 ausgebildet ist und das Rückhalteelement (7) ein Lösen des Verbindungselements (9) aus der Aufnahmeöffnung (8) in zumindest eine vertikale Richtung (V) blockiert, aber eine Bewegung des Verbindungselements in zumindest eine horizontale Richtung (H1, H2) innerhalb des Rückhalteelements (7) ermöglicht.

13. Kombination (50) nach Anspruch 12, **dadurch gekennzeichnet, dass** das Rückhalteelement (7) einen Aufnahmeraum (13) für das Verbindungselement (9) ausbildet, welcher in einem Querschnitt des Rückhalteelements (7) betrachtet eine größere innere Breite (B_{I7}) aufweist als die Breite (B₉) des Verbindungselements (9), sodass das Verbindungselement (9) in die horizontale Richtung (H1, H2) mit einem horizontalen Spiel (24) beweglich innerhalb des Aufnahmeraums angeordnet ist.

14. Kombination (50) nach Anspruch 13, **dadurch gekennzeichnet, dass** das horizontale Spiel (24) zumindest 10 mm beträgt.

15. Verfahren zur Montage eines Solarelements (2) oder einer Halterung (10) für ein Solarelement (2) an einer Aufstellfläche (3), insbesondere einer Dachfläche (3a), mit den Schritten:
Anbringen eines Adapterelements (1) nach einem der Ansprüche 1 bis 11 an der Aufstellfläche (3) durch Verbinden der Verbindungsschicht (5) mit der Aufstellfläche (3), vorzugsweise wobei ein Abdeckelement von der Verbindungsschicht abgezogen wird;
Verbinden eines Verbindungselements (9) des Solarelements (2) oder der Halterung (10) des Solarelements (2) mit dem Adapterelement (1), indem das Verbindungselement (9) in die Aufnahmeöffnung (8) eingeführt wird, wobei das Rückhalteelement (7) ein Lösen des Verbindungselements (9) aus der Aufnahmeöffnung (8) in zumindest eine vertikale Richtung (V) blockiert und eine Bewegung des Verbindungselements (9) in zumindest eine horizontale Richtung (H1, H2) innerhalb des Rückhalteelements (7) ermöglicht.
